Europäisches Patentamt

European Patent Office

Office européen des brevets

(11) Publication number: **0 079 610**
**B1**

# EUROPEAN PATENT SPECIFICATION

(45) Date of publication of patent specification: **28.05.86**

(51) Int. Cl.⁴: **F 16 L 58/18**

(21) Application number: **82110581.4**

(22) Date of filing: **16.11.82**

(54) **Method of forming covering protecting layer on joint between covered steel pipes.**

(30) Priority: **18.11.81 JP 183698/81**

(43) Date of publication of application:
**25.05.83 Bulletin 83/21**

(45) Publication of the grant of the patent:
**28.05.86 Bulletin 86/22**

(84) Designated Contracting States:
**DE FR GB IT**

(56) References cited:
**CA-A- 904 770**
**GB-A-1 078 559**
**US-A-3 415 287**
**US-A-4 096 017**

**OIL & GAS JOURNAL, vol. 77, no. 51, 17 December 1979, Tulsa W.W. MORRIS et al. "New insulation system developed for offshore pipelines", pages 56-63**

(73) Proprietor: **Ube Industries, Ltd.**
**12-32, Nishihonmachi 1-chome**
**Ube-shi, Yamaguchi-ken (JP)**

(72) Inventor: **Itakura, Akio c/o Chiba Sekiyukagakukojo**
**Ube Industries, Ltd. 8-1, Goiminamikaigan Ichihara-shi Chiba-ken (JP)**
Inventor: **Kataoka, Hideto c/o Chiba Sekiyukagakukojo**
**Ube Industries, Ltd. 8-1, Goiminamikaigan Ichihara-shi Chiba-ken (JP)**

(74) Representative: **Brandes, Jürgen, Dipl.-Chem. Dr.**
**Thierschstrasse 8**
**D-8000 München 22 (DE)**

# 0 079 610

**Description**

Background of the invention
(1) Field of the invention

This invention relates to a method of forming a covering protecting layer on a joint between covered steel pipes. More particularly, it relates to a method of forming a covering protecting layer on a joint between covered steel pipes each having a protecting concrete layer formed on the periphery thereof.

(2) Description of the prior art

Covered steel pipes, that is, steel pipes having a synthetic resin covering layer formed on the periphery thereof, have a high resistance to corrosion caused by environmental factors, and therefore, they are widely used for construction of crude oil transportation pipelines, gas pipelines and city water pipelines. Of these pipelines, petroleum transportation pipelines are ordinarily laid out in districts of severe environmental conditions, and therefore, they are usually constructed from covered steel pipes.

The resistance of ordinary covered steel pipes is insufficient for the use as the pipelines laid out in districts of environmental conditions more corrosive than in districts of ordinary environmental conditions, for example, pipelines placed in environments where the pipes always fall in contact with sea water. Accordingly, under such severe conditions, for example, in the sea bottom, ordinary covered steel pipes are not used, but covered steel pipes having a protecting concrete layer formed on the covering synthetic resin layer (hereinafter referred to as "protecting concrete covered steel pipes") are used. The protecting concrete layer of a protecting concrete covered steel pipe of this type exerts various functions. For example, the protecting concrete layer protects the steel pipe from corrosion by sea water, prevents the steel pipe from deterioration or breakage due to collision against a rock or reef on the sea bottom and acts as the weight for the pipeline.

In the case where a pipeline is laid out on the sea bottom by using such protecting concrete covered steel pipes, there is ordinarily adopted a method in which units of protecting concrete covered steel pipes are connected one by one on a ship on the sea to form a continuous pipeline and the pipeline is sunk on the sea bottom. A protecting concrete covered steel pipe of the type to be used for this purpose ordinarily comprises a covering synthetic resin layer formed on the periphery of a steel pipe while both the end portions of the steel pipe are left exposed and a protecting concrete layer formed on the periphery of the covering synthetic resin layer while both the end portions, in the longitudinal direction, of the covering synthetic resin layer are left exposed.

Connection of protecting concrete covered steel pipes having the above-mentioned structure is accomplished by welding or the like, and the steel pipe should naturally be exposed in the vicinity of the joint. Accordingly, a covering synthetic resin layer and a protecting concrete layer should also be formed on the exposed portion close to the joint. The operation of forming a covering synthetic resin layer and a protecting concrete layer on the exposed portion in the vicinity of the joint of a protecting concrete covered steel pipe is ordinarily performed according to the following procedures.

At first, a synthetic resin tape or sheet is wrapped around the exposed portion (i.e., the portion which is not covered with a concrete layer) of steel pipes in the vicinity of the joint, a flame of a gas burner or the like is applied to the tape or sheet to elevate the surface temperature of the tape or sheet, and the tape or sheet is manually pressed and elongated by hands with shrinkage of the heat-shrinkable tape or sheet while intermittently applying the flame of the gas to the tape or sheet, if necessary, so that the exposed portion of the steel pipe is completely covered with the heat-shrinkable tape or sheet and both the end portions of the tape or sheet are lapped on the ends of the covering synthetic resin layer formed in advance on the steel pipe. Then, a cover (such as a protecting metallic tube) for connecting the ends of the protecting concrete layers on both the sides of the joint is attached so that a closed space defined by the cover and the protecting concrete layers on both the sides of the joint is formed, and a molten mastic is forced into the space through a mastic pouring opening formed on the cover. The poured mastic is thus filled in the space within the cover. After covering and protection have thus been completed, the pipe line is laid out on the sea bottom or buried in the ground.

The above-mentioned method of forming a covering protecting layer in the vicinity of the joint of a protecting concrete covered steel pipe has problems. For example, a long time is necessary for completion of the operation and a burner should be used for heating the surface of the steel pipe. If a flame of a gas burner or the like is applied to a heat-shrinkable tape or sheet, thermal deterioration is partially caused in the tape or sheet composed of a synthetic resin. Furthermore, the covering operation of manually pressing and elongating the heat-shrinkable tape or sheet wrapped around the surface of the steel pipe by hand requires high experience and is very troublesome.

Summary of the invention

It is therefore a primary object of the present invention to provide a method of forming a covering protecting layer on a joint between protecting concrete covered steel pipes, in which the problems of the conventional method are solved or at least mitigated.

In accordance with the present invention, there is provided a method of forming a covering protecting layer on a joint between covered steel pipes, which comprises wrapping a heat-shrinkable sheet around the

2

periphery of a joint between covered steel pipes each having a protecting concrete covering layer formed on the periphery thereof; attaching a cover so that it forms a closed space defined by the joint having the covering layer of the heat-shrinkable sheet formed thereon and by side walls of the protecting concrete layers on both the sides of the joint; pouring fused mastic into the closed space through an opening formed on the cover; and cooling the mastic whereby the mastic is solidified to form a covering protecting layer, which is characterized in that a heat-shrinkable sheet of a low temperature shrinking type is used as the heat-shrinkable sheet, and asphalt maintained at a temperature of about 160° to 250°C is poured as the fused mastic into the closed space whereby the heat-shrinkable sheet is shrunk by the heat provided by the asphalt.

In the present invention, a heat-shrinkable sheet of the low temperature shrinking type is used instead of a heat-shrinkable tape or sheet used in the conventional method of forming a covering protecting layer on a joint of covered steel pipes, whereby the conventional heating operation using a gas burner can be omitted, and formation of a covering layer of the heat-shrinkable sheet is accomplished by the heat given at the step of applying fused asphalt, which is conducted after the heat-shrinkable sheet has been wrapped around the periphery of the steel pipes.

Brief description of the drawings

The present invention will now be described in detail with reference to the accompanying drawings, in which:

Fig. 1 is a diagram illustrating a joint between covered steel pipes;

Fig. 2 is a diagram illustrating the state where the operation of wrapping a heat-shrinkable sheet around the pipe joint shown in Fig. 1 has been completed;

Fig. 3 is a diagram illustrating the state where an asphalt-pouring cover is attached to the heat-shrinkable sheet-wrapped pipe joint shown in Fig. 2; and,

Fig. 4 is a graph showing the heat shrinkability characteristics of heat-shrinkable sheets prepared in the Example and Comparative Example.

Description of the preferred embodiments

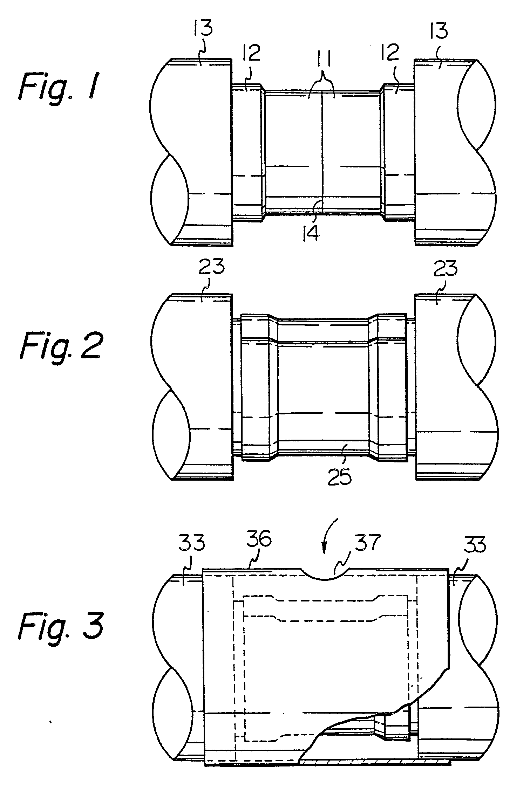

Referring to Fig. 1, reference numerals 11, 12 and 13 represent an exposed portion of the steel pipe, a covering synthetic resin layer formed on the steel pipe and a protecting concrete layer formed on the covering synthetic resin layer 12, respectively, and reference numeral 14 represents the joint between steel pipes. As is seen from Fig. 1, the protecting concrete covered steel pipe ordinarily comprises a covering synthetic resin layer which covers a steel pipe while both the end portions of the steel pipe are left exposed and a protecting concrete layer which is formed on the periphery of the covering layer of the steel pipe while both the end portions, in the longitudinal direction, of the covering synthetic resin layer are left exposed.

According to the conventional method of forming a covering protecting layer on a joint between covered steel pipes, a heat-shrinkable tape or sheet is wrapped around the exposed portion 11 of the steel pipe, the tape or sheet is heated by a flame of a gas burner to elevate the temperature to a level higher than the shrinking temperature of the tape or sheet, the heating stopped, and immediately thereafter, the tape or sheet is pressed and elongated by hand, whereby the tape or sheet is closely covered on the exposed portion of the steel pipe.

In contrast, according to the present invention, the operation of heating the exposed portion of the steel pipe by a gas burner or the like is not performed at all, and a heat-shrinkable sheet is directly wrapped around the exposed portion of the steel pipe. This state where the heat-shrinkable sheet is wrapped around the exposed portion of the steel pipe shown in Fig. 1 is illustrated in Fig. 2.

The operation of wrapping the heat-shrinkable sheet 25 on the exposed portion of the steel pipe in the present invention may be the same as the wrapping operation in the conventional method. For example, there may be adopted a method in which the heat-shrinkable sheet 25 is wrapped so that parts near both the ends of the heat-shrinkable sheet are sufficiently lapped on the covering layer 12 formed on the steel pipe and both the ends are contacted with the side wall faces of the protecting concrete layer 23 or located slightly on the inner sides thereof, and both the end portions, in the longitudinal direction, of the heat-shrinkable sheet are lapped or bonded with a margin enough to comply with the shrinkage of the sheet or the shrinkage stress due to the heat.

The present invention is characterized in that a heat-shrinkable sheet of the low temperature shrinking type is used as the heat-shrinkable sheet. By the heat-shrinkable sheet of the low temperature shrinking type is meant a heat-shrinkable sheet of the type in which heat shrinkage of a relatively high degree is caused even at relatively low temperatures and the heat shrinkage percentage is not abruptly increased even if the temperature is elevated to a high level. As a preferred example of the heat-shrinkable sheet of the low temperature shrinking type, there can be mentioned a heat-shrinkable sheet having such shrinkage characteristics that the shrinkage (the percentage of shrinkage based on the size of the sheet at normal temperature) at 100°C is at least 7%, preferably at least 10%, and the shrinkage at 140°C is not more than 30%, preferably not more than 25%.

A heat-shrinkable tape or sheet of the high temperature shrinking type has been used for the conventional method of forming a covering protecting layer on a joint between covered steel pipes.

3

Namely, according to the conventional method, as pointed out hereinbefore, after a heat-shrinkable tape or synthetic resin sheet has been wrapped around the exposed portion of a steel pipe, the surface temperature of the tape or sheet is elevated by applying a flame of a gas burner or the like for a certain time, and the heat-shrinkable tape or sheet is pressed or elongated by hand with shrinkage of the tape or sheet, whereby the exposed portion of the steel pipe is covered with the heat-shrinkable tape or sheet. Accordingly, at the step of covering the heat-shrinkable tape or sheet closely to the exposed portion of the steel pipe under heating, in order to form a closely adhering covering, it is necessary to complete the heat shrinkage within a short time under inspection by a worker. For this reason and in view of a physical properties of synthetic resin sheets, in the conventional method, there have been used heat-shrinkable tapes or sheets of the high temperature shrinking type which exhibit no substantial shrinkage at low temperatures and in which, when the temperature is elevated to a certain level, prominent heat shrinkage is caused and the shrinkage is advanced almost to the shrinkage limit in a short time.

In contrast, according to the present invention, by using a heat-shrinkable sheet of the low temperature shrinking type, the step of preheating the exposed portion of a steel pipe can be omitted, and shrinkage of the heat-shrinkable sheet is accomplished by utilizing the heat possessed by fused asphalt, applied afterwards to the periphery of the heat-shrinkable sheet.

A material as used for a heat-shrinkable sheet used in the conventional method may be used for the heat-shrinkable sheet of the present invention, after it has been treated so that it is converted to the low temperature shrinking type.

As the sheet material, there can be mentioned thermoplastic synthetic resins such as polyethylene, polypropylene, an ethylene/propylene copolymer, polyvinyl chloride, a polyester and polyamide. High-density polyethylene is especially preferred, and also an ethylene/propylene copolymer is preferred. The technique of converting the sheet material to the low temperature shrinking type is known. This conversion can easily be accomplished by appropriately adjusting and controlling the drawing conditions such as the drawing temperature and drawing ratio during or after the sheet-preparing step according to the kind of the material and the desired low temperature shrinking degree. It is preferable that the heat resistance be given to the heat-shrinkable sheet by crosslinking by irradiation with electron beams or the like before or after the step of imparting the heat shrinkability. Furthermore, in order to ensure a good adhesion to the surface of the exposed portion of the steel pipe, it is preferable that an adhesive layer be formed on one surface of the heat-shrinkable sheet (the surface to be contacted with the exposed portion of the steel pipe).

After the heat-shrinkable sheet has been wrapped around the joint between the steel pipes as shown in Fig. 2, as in the conventional method, a cover (such as a protecting metallic tube) 36 is attached to form a closed space defined by the joint having the covering layer of the heat-shrinkable sheet formed thereon and side walls of protecting concrete layers 33 on both the sides of the joint, as shown in Fig. 3, and then, fused asphalt maintained at about 160° to 250°C is poured into the closed space through a mastic pouring opening 37 formed on the cover.

The poured asphalt is applied to the periphery of the heat-shrinkable sheet wrapped around the exposed portion of the steel pipe, whereby heat sufficient for heat shrinkage is given to the heat-shrinkable sheet and the sheet begins to shrink and covers the surface of the exposed portion of the steel pipe closely. The asphalt is filled in·the space within the cover 36 and is naturally cooled and solidified by standing. Formation of a covering protecting layer on the joint between covered steel pipes is thus completed.

The above-mentioned method of forming a covering protecting layer according to the present invention is advantageous in various points. For example, a burner for heating the surface of a steel pipe need not be used at all, and no experience or skill is necessary for the operation of wrapping a heat-shrinkable sheet because the sheet is wrapped around the surface of a steel pipe maintained at normal temperatures. Furthermore, this wrapping operation can easily be accomplished in a very short time. Since the heat-shrinkable sheet is not heated at a temperature higher than the temperature of the fused mastic, little or no thermal deterioration of the heat-shrinkable sheet is caused. Moreover, the covering synthetic resin layer and protecting mastic layer formed according to the present invention are comparable or superior to those formed according to the conventional method.

The present invention will now be described in detail with reference to the following Example and Comparative Example.

Example and Comparative Example

A polyethylene sheet having a thickness of 0.8 mm was treated under conditions shown in Table 1 to render it heat-shrinkable.

# 0 079 610

### TABLE 1

| Specimen No. | Drawing temperature (°C) | Drawing ratio |
|---|---|---|
| 1 | 90 | 1.25 |
| 2 | 85 | 1.25 |
| 3 | 115 | 1.25 |
| 4 | 115 | 1.40 |
| 5 | 120 | 1.40 |

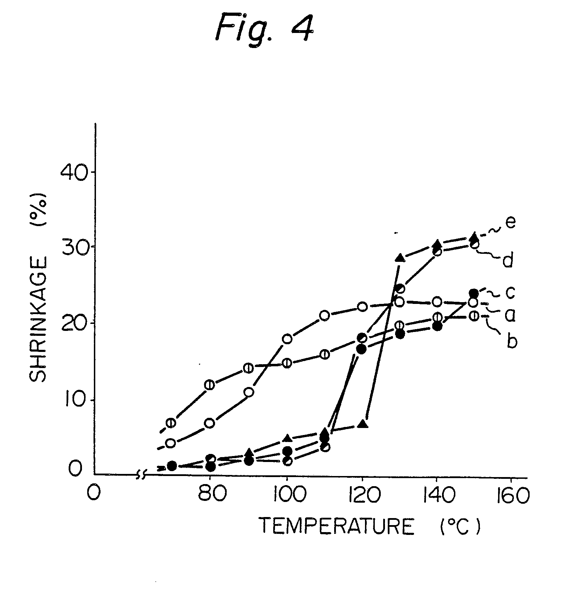

The heat shrinkage characteristics of the obtained heat-shrinkable sheets are shown in the graph of Fig. 4, wherein curves a, b, c, d and e correspond to specimen No. 1, 2, 3, 4 and 5, respectively. Specimens 1 and 2 are heat-shrinkable sheets of the low temperature shrinking type, and specimen 3 through 5 are heat-shrinkable sheets of the high temperature shrinking type.

Each of these heat-shrinkable sheets was independently wrapped around the exposed portion of a joint between covered steel pipes without preheating the exposed portion, and then, a cover was attached to the outside as shown in Fig. 3 and fused asphalt (190°C) was poured through a pouring opening of the cover and applied to the periphery of the heat-shrinkable sheet. After the asphalt had been cooled and solidified, the cover was removed. Thus, a covering protecting layer was formed. Then, the protecting asphalt layer was removed and the state of the covering layer composed of the heat-shrinkable sheet was observed. The observation results are shown in Table 2.

### TABLE 2

| Specimen No. | State of formed covering layer |
|---|---|
| 1 | Good appearance, high resistance to peeling from the surface of the steel pipe, very small amount of air bubbles present on the inner side of the covering layer |
| 2 | Same as above |
| 3 | Many concavities and convexities present on the entire surface, many wrinkles formed, large amount of air bubbles present on the inner side of the covering layer, small groove-like spaces communicated with the outside through both the sleeve portions of the covering layer |
| 4 | Irregular wrinkles formed on the entire surface, small amount of air bubbles present on the inner side of the covering layer |
| 5 | Many convexities and concavities on the entire surface, many wrinkles formed, large amount of air bubbles present on the inner side of the covering layer, small groove-like spaces communicated with the outside through both the sleeve portions of the covering layer. |

## Claims

1. A method of forming a covering protecting layer on a joint between covered steel pipes, which comprises wrapping a heat-shrinkable sheet (25) around the periphery of a joint (14) between covered steel pipes each having a protecting concrete covering layer (13, 23, 33) formed on the periphery thereof; attaching a cover (36) so that it forms a closed space defined by the joint having the covering layer of the heat-shrinkable sheet formed thereon and by side walls of the protecting concrete layers on both the sides of the joint; pouring fused mastic into the closed space through an opening (37) formed on the cover; and cooling the mastic whereby the mastic is solidified to form a covering protecting layer, characterized in that a heat-shrinkable sheet (25) of a low temperature shrinking type is used as the heat-shrinkable sheet, and asphalt maintained at a temperature of about 160° to 250°C is poured as the fused mastic into the closed space whereby the heat-shrinkable sheet is shrunk by the heat provided by the asphalt.

2. A method according to claim 1, wherein the heat-shrinkable sheet of the low temperature shrinking type exhibits a shrinkage of at least 7% at a temperature of 100°C and a shrinkage of not more than 30% at a temperature of 140°C, as expressed in terms of the percentage shrinkage based on the size of the sheet at normal temperature.

3. A method according to claim 1, wherein the heat-shrinkable sheet of the low temperature shrinking type exhibits a shrinkage of at least 10% at a temperature of 100°C and a shrinkage of not more than 25% at a temperature of 140°C, as expressed in terms of the percentage shrinkage based on the size of the sheet at normal temperature.

# 0 079 610

4. A method according to claim 1, wherein the heat-shrinkable sheet of the low temperature shrinking type is made of a thermoplastic synthetic resin selected from the group consisting of polyethylene, polypropylene, an ethylene/propylene copolymer, polyvinyl chloride, polyester and polyamide.

## Patentansprüche

1. Verfahren zur Ausbildung eines Schutzüberzuges an einer Verbindungsstelle zwischen verkleideten Stahlrohren, bei dem man eine durch Zufuhr von Wärme schrumpfbare Folie (25) um die Peripherie einer Verbindungsstelle (14) zwischen verkleideten Stahlrohren wickelt, die jeweils eine schützende Betondeckschicht (13, 23, 33), die auf der Peripherie der Stahlrohre erzeugte wurde, aufweisen; bei dem man eine Abdeckung (36) derart anbringt, daß diese einen abgeschlossenen Raum erzeugt, der abgegrenzt ist, durch die Verbindungsstelle mit der hierauf erzeugten Deckschicht, aus der durch Zufuhr von Wärme schrumpfbare Folie und den Seitenwänden der schützenden Betonschichten auf beiden Seiten der Verbindungsstelle; bei dem man aufgeschmolzene Mastix durch eine in der Abdeckung erzeugte Öffnung (37) in den geschlossenen Raum gießt; und bei dem man die Mastix abkühlt, wodurch die Mastix unter Ausbildung eines Schutzüberzuges verfestigt wird, dadurch gekennzeichnet, daß als durch Zufuhr von Wärme schrumpfbare Folie eine durch Zufuhr von Wärme schrumpfbare Folie (25) eines bei niedriger Temperatur schrumpfenden Typs verwendet wird und daß als aufgeschmolzene Mastix auf einer Temperatur von etwa 160°C bis 250°C gehaltener Asphalt in den geschlossenen Raum eingegossen wird, wobei die Durch Zufuhr von Wärme schrumpfbare Folie durch die von dem Asphalt zugeführte Wärme geschrumpft wird.

2. Verfahren nach Anspruch 1, dadurch gekennzeichnet, daß die durch Zufuhr von Wärme schrumpfbare Folie vom bei niedriger Temperatur schrumpfenden Type bei einer Temperatur von 100°C einen Schrumpf von mindestens 7% und bei einer Temperatur von 140°C einen Schrumpf von nicht mehr als 30% aufweist, ausgedrückt in Prozent Schrumpf, bezogen auf die Größe der Folie bei Normaltemperatur.

3. Verfahren nach Anspruch 1, dadurch gekennzeichnet, daß die durch Zufuhr von Wärme schrumpfbare Folie vom bei niedriger Temperatur schrumpfenden Typ bei einer Temperatur von 100°C einen Schrumpf von mindestens 10% und bei einer Temperatur von 140°C einen Schrumpf von nicht mehr als 25% aufweist, ausgedrückt in Prozent Schrumpf, bezogen auf die Größe der Folie bei Normaltemperatur.

4. Verfahren nach Anspruch 1, dadurch gekennzeichnet, daß die durch Zufuhr von Wärme schrumpfbare Folie vom bei niedriger Temperatur schrumpfenden Typ aus einem thermoplastischen synthetischen Harz, ausgewählt aus der Gruppe Polyethylen, Polypropylen, einem Ethylen-/Propylencopolymer, Polyvinylchlorid, Polyester und Polyamid hergestellt worden ist.

## Revendications

1. Procédé de formation d'une couche protectrice de recouvrement sur une jonction entre des tubes d'acier recouverts, qui consiste à enrouler une feuille thermorétractable (25) autour de la périphérie d'une jonction (14) entre des tubes d'acier recouverts ayant chacun une couche de recouvrement de béton protecteur (13, 23, 33) formée à sa périphérie; à fixer une gaine (36) de manière à former une espace fermé défini par la jonction avec la couche de recouvrement de la feuille thermorétractable formée par-dessus et les parois latérales des couches de béton protecteur sur les deux côtés de la jonction; à verser du mastic fondu dans l'espace fermé à travers une ouverture (37) formée dans la gaine; et à refroidir le mastic de manière à solidifier le mastic pour former une couche protectrice de recouvrement, caractérisé en ce que l'on utilise comme feuille thermorétractable une feuille thermorétractable (25) du type rétractable à basse température, et on verse de l'asphalte maintenu à une température d'environ 160 à 250°C comme mastic fondu dans l'espace fermé, la feuille thermorétractable étant contractée par la chaleur cédée par l'asphalte.

2. Procédé selon la revendication 1, dans lequel la feuille thermorétractable du type rétractable à basse température présente un retrait d'au moins 7% à une température de 100°C et un retrait de pas plus de 30% à une température de 140°C, exprimés en pourcentages de retrait, rapportés à la dimension de la feuille à la température normale.

3. Procédé selon la revendication 1, dans lequel la feuille thermorétractable du type rétractable à basse température présente un retrait d'au moins 10% et une température de 100°C et un retrait de pas plus de 25% à une température de 140°C, exprimés en pourcentages de retrait, rapportés à la dimension de la feuille à température normale.

4. Procédé selon la revendication 1, dans lequel la feuille thermorétractable du type rétractable à basse température est faite d'une résine synthétique thermoplastique choisie parmi le polyéthylène, le polypropylène, les copolymères éthylène/propylène, le chlorure de polyvinyl, les polyesters et les polyamides.

Fig. 1

Fig. 2

Fig. 3

*Fig. 4*